# EUROPEAN PATENT APPLICATION

(11) **EP 4 647 195 A1**
(43) Date of publication of application: **12.11.2025**
(21) Application number: 23929830.0
(22) Date of filing: 19.09.2023
(51) Int. Cl.: B23C 3/00, B23C 9/00, B23Q 3/06, B23Q 17/20, G06F 30/20

(54) **MIRROR MILLING DEVICE FOR MACHINING ARCHED ANNULAR THIN-WALL WORKPIECE, AND MACHINING METHOD THEREWITH**

(30) Priority: 24.03.2023 CN 202310306147
(71) Applicant: Shanghai Top Numerical Control Technology Co., Ltd., Shanghai 201100 (CN)
(72) Inventor: WANG, Yuhan, Shanghai 201100 (CN)
(74) Representative: Lindner Blaumeier Patent- und Rechtsanwälte
(86) International application number: PCT/CN2023/119578
(87) International publication number: WO 2024/198256

(57) **Abstract**

Provided in the present invention are a mirror milling device for machining an arched annular thin-wall workpiece, and a machining method therewith. The device comprises an external vertical gantry-type milling head assembly, an internal support-type measuring head assembly, a clamping tool and a workbench. In the present invention, an internal and external apparatus layout structure form is adopted, external milling and internal support measurement are performed on any machining point in the normal direction of a workpiece machining area, and green and environmentally-friendly machining of the workpiece is implemented. The method comprises: dividing parallel curves of a theoretical surface and a reverse surface; performing triangular meshing on dividing points of the theoretical surface; taking indexes of three points as indexes of a triangle; calculating, in a triangular mesh, area coordinates of position points of a machining path; forming triangles with points corresponding to indexes of the reverse surface; reversely calculating coordinate points by using the area coordinates; and compensating the machining path on a spherical surface from a design curved surface to an actual curved surface obtained in reverse.

## Description

### BACKGROUND OF THE INVENTION

### 1. Field of the Invention

The present invention relates to the technical field of mirror milling devices, in particular to a mirror milling device for machining an arched annular thin-walled workpiece and a machining method thereof.

### 2. Description of the Related Art

An arched annular thin-walled workpiece has the characteristics of large dimension, weak rigidity, and easy deformation, such that the wall thickness accuracy and contour accuracy thereof are hard to control, and conventional mechanical milling cannot be performed. At present, a chemical milling process is mainly used, but has low accuracy, heavy pollution, and higl1 energy consumption.

In the patent document CN107344251A (application number: CN201710571555.5), a mirror milling method and system for skin machining are disclosed, in which a machining cutter is arranged on a machined surface; and a group of floating support devices, a skin shape laser scanning device, and a group of skin wall thickness real-time measurement devices are arranged in a symmetrical region of the machined surface of a skin. Before skin machining, first, an actual contour of the skin is obtained by using the skin shape laser scanning device, and a machining path is adaptively adjusted based on the actual contour. Then, during skin machining, the machining cutter moves in coordination with the floating support devices and the skin wall thickness real-time measurement devices in the symmetrical region of the machined surface, the floating support devices provide flexible support for a machined region of the skin workpiece, the skin wall thickness real-time measurement devices obtain a thickness of the machined region, and the machining cutter adaptively adjusts a cutting depth based on the measured actual thickness of the workpiece to implement wall thickness control on the skin. The equipment in the patent document is mainly used for machining the skin workpiece, and has good adaptability to the skin workpiece, but is not applicable to an arched annular thin-walled workpiece. In the patent, an AB double tilting head structure is used on a support side, but is complex and large in size for the arched annular thin-wall workpiece, and has interferences during machining. In the present invention, swing of an axis A2 of a support probe is combined with rotation of an axis C2 of a rotary table at the bottom, which achieves good adaptability to the arched annular thin-walled workpiece, and deformation (such as local concave-convex deformation of the workpiece) of the workpiece in a roundness direction can be adapted by adding an axis X2. In the patent, the workpiece is vertically clamped and fixed by using a flexible clamping arm, such that clamping of the arched annular thin-walled workpiece is complicated, clamping points are hard to determine, and a problem of insufficient rigidity easily occurs. In the present invention, a large end of the workpiece is laid flat downwards and is clamped and fixed along a circumferential direction of the workpiece by using a vice or a press plate, such that the clamping points are uniformly distributed, the clamping operation is simple, and the rigidity is better. In summary, the patent cannot solve the existing technical problems and cannot meet the requirements of the present invention, and a mirror milling device designed and manufactured according to the structural characteristics of the arched annular thin-walled workpiece has better economic applicability and popularization value.

### SUMMARY OF THE INVENTION

In view of the defects in the prior art, the present invention aims to provide a mirror milling device for machining an arched annular thin-walled workpiece and a machining method thereof.

The mirror milling device for machining an arched annular thin-walled workpiece provided according to the present invention includes an external vertical gantry milling head assembly, an internal support and measurement head assembly, a clamping fixture, and a worktable, where
the external vertical gantry milling head assembly is located on an outer side of a workpiece and implements external milling of the workpiece;
the internal support and measurement head assembly is located on an inner side of the workpiece and implements internal support and measurement of the workpiece;
the external vertical gantry milling head assembly and the internal support and measurement head assembly are in a vertically opposite position relationship;
the clamping fixture is located between the external vertical gantry milling head assembly and the internal support and measurement head assembly, and implements positioning, clamping and fixation of the workpiece; and
the worktable is located below the clamping fixture and functions to support and fix the clamping fixture.

Preferably, the external vertical gantry milling head assembly and the internal support and measurement head assembly form an internal and external synchronous motion relationship with respect to the workpiece in the form of a vertically opposite layout structure, have strokes covering an entire workpiece machining region, and implement real-time milling and follow-up support and measurement.

Preferably, the clamping fixture is fixed in different clamping ways of clamping by a positioning vice or pressing by a press plate based on different edge states of the workpiece, a clamping range of the clamping fixture is adjustable, and different specifications and dimensions are capable of being changed to adapt to clamping of workpieces with different specifications.

Preferably, the clamping fixture is of an annular structure.

Preferably, the worktable is of an annular structure, and clamping fixtures with different specifications are clamped with/separated from the worktable by means of zero point positioning and are guided by guide pins which function to protect the zero point positioning.

Preferably, the external vertical gantry milling head assembly includes bases, slide rests, a cross beam, a saddle, a ram, a double fork tilting head, a milling head, and a cutter;
the external vertical gantry milling head assembly has at least five degrees of freedom for controlling movement of the cutter in a spatial range, and has a stroke covering machining of any point on an outer surface of the workpiece;
the bases are fixed on the ground and distributed in a mirror symmetry manner on left and right sides;
the slide rests are distributed in a mirror symmetry manner on the left and right sides, are connected to the bases by at least one group of linear guide rails on one side, respectively, and are driven by transmission mechanisms;
the cross beam and the slide rests are fixed together by screws;
the saddle is connected to the cross beam by at least two groups of linear guide rails and is driven by a transmission mechanism;
the ram is connected to the saddle by at least two groups of linear guide rails and is driven by a transmission mechanism;
the double fork tilting head is mounted at an end part of the ram;
the milling head is mounted in a middle of the double fork tilting head; and
the cutter is mounted at a front end of the milling head.

Preferably, the external vertical gantry milling head assembly has six axes, comprising X1, Y1, Z1, A1, C1, and W1, in which X1, Y1, Z1, and W1 are translation axes, and A1 and C1 are rotation axes;
front-back movement of the slide rests and the cross beam relative to the bases is the axis X1;
left-right movement of the saddle on the cross beam is the axis Y1 which is perpendicular to the axis X1;
up-down movement of the ram on the saddle is the axis Z1 which is perpendicular to the axis X1 and the axis Y1, and a balancing device is provided for balancing a weight to improve dynamic response of the axis Z1;
rotation of the double fork tilting head relative to a center line thereof is the axis C1 which is parallel to the axis Z1 and implements ±360° rotation;
rotation of the milling head relative to an axis of a position connected to the double fork tilting head is the axis A1 which moves in a plane where the axis X1 and the axis Y1 are located, and the axis A1, when the axis C1 is at different rotation angles, is parallel to the axis X1 or the axis Y1 at a time point, the axis A1 implements ±110° swing; and
front-back movement of the cutter relative to the milling head is the axis W1 which implements rapid feed in a normal direction.

Preferably, the internal support and measurement head assembly includes a fixed base, a rotary table, a support column, a support saddle, a support tilting head, a support probe, and a follow-up support and measurement component;
the internal support and measurement head assembly has at least five degrees of freedom for controlling movement of the follow-up support and measurement component in the spatial range, and has a stroke covering support and measurement of an inner surface of the workpiece;
the fixed base is fixed on the ground and plays an integral support role;
the rotary table is connected to the fixed base by a collar and is driven by a transmission mechanism;
the support column is connected to the rotary table by at least two groups of linear guide rails and is driven by a transmission mechanism;
the support saddle is connected to the support column by at least two groups of linear guide rails and is driven by a transmission mechanism;
the support tilting head is connected to the support saddle by at least two groups of linear guide rails and is driven by a transmission mechanism;
the support probe is mounted on a side surface of the support tilting head; and
the follow-up support and measurement component is mounted at a front end of the support probe.

Preferably, the internal support and measurement head assembly has six axes, comprising X2, Y2, Z2, A2, C2, and W2, in which X2, Y2, Z2, and W2 are translation axes, and A2 and C2 are rotation axes;
rotation of the rotary table on the fixed base is the axis C2 which rotates about a center line of the rotary table and a center line of the fixed base, and has a rotation range of -120° to 600°;
front-back movement of the support column on the rotary table is the axis Y2;
up-down movement of the support saddle on the support column is the axis Z2 which is perpendicular to the axis Y2, and a balancing device is provided for balancing a weight to improve dynamic response of the axis Z2;
front-back movement of the support tilting head above the support saddle is the axis X2, and the axis X2, the axis Y2, and the axis Z2 are perpendicular to one another in space;
rotation of the support probe relative to an axis of a position connected to the support tilting head is the axis A2 which has a swing range of -10° to 100°; and
front-back movement of the follow-up support and measurement component relative to the support probe is the axis W2 which implements rapid feed in the normal direction.

Preferably, the fixed base is of an annular structure.

The machining method of the mirror milling device for machining an arched annular thin-walled workpiece provided according to the present invention includes:
a designed surface calculation step: selecting a center point on a designed surface, and then creating parallel curves with an equal geodesic distance outwards by using the center point as a center; assuming that a plane XOZ passes through the center point, and equally dividing the designed surface into two parts; and dividing each of the parallel curves into a plurality of line segments with an equal length by using an intersection point of the plane XOZ and the parallel curve as a reference point;
a reverse surface calculation step: selecting a center point on a reverse surface, and then creating parallel curves with an equal geodesic distance outwards by using the center point as a center; assuming that the plane XOZ passes through the center point, and equally dividing the reverse surface into two parts; and dividing each of the parallel curves into a plurality of line segments with an equal length by using an intersection point of the plane XOZ and the parallel curve as a reference point;
a coordinate compensation step: performing triangular meshing on endpoints of the line segments on the designed surface, calculating area coordinates, in corresponding triangular meshes, of position points on a machining path, and calculating corresponding position points on the reverse surface based on the area coordinates and indexes of the corresponding triangular meshes; and
a machining step: importing results of the coordinate compensation step into a numerical control system, causing a support tilting head to approach a workpiece, obtaining a thickness, causing a milling head to implement cutting, performing real-time compensation by a cutter spindle to obtain a target thickness, and performing synchronous mechanical mirror milling motion on two sides to obtain a thickness reduction feature; and replacing a support component, and performing synchronous mechanical mirror milling motion on two sides to complete hole making and edge cleaning features.

Further, the designed surface calculation step includes:
a vertex determination step: determining a vertex on the designed surface, and creating a circle with the vertex as a center, where a length of an arc line from any point on the circle to the vertex is d;
a parallel curve coverage step: by using the circle as reference, creating a parallel curve on the designed surface, with a parallel distance being a geodesic distance and a length being d, and continuously creating parallel curves until the entire designed surface is covered;
an intersection point calculation step: calculating two intersection points of the reference plane XOZ and the parallel curve, and taking an intersection point in a direction +X;
a circular arc obtaining step: by using the taken intersection point as reference, dividing the circle into circular arcs with an equal length being d, and if a perimeter of the circle is incapable of being divisible by d, finely adjusting the length of the circular arcs to ensure that the length of each of the circular arcs on a circumference is same;
a circular arc numbering step: numbering endpoints of the circular arcs which are referred to as matching points hereinafter by using a two-dimensional array (m, n), where m represents an index of the parallel curve, and n represents indexes of division points on the parallel curve; and
a segment number recording step: recording the number of segments obtained by equally dividing each of the parallel curves.

Further, the reverse surface calculation step includes:
a reference point obtaining step: performing processes of the vertex determination step, the parallel curve coverage step, and the intersection point calculation step on the reverse surface, and obtaining a parallel curve division reference point on the reverse surface; and
a division point numbering step: based on the number of segments obtained by dividing each of the circular arcs in the segment number recording step, equally dividing the parallel curve on the reverse surface, and numbering the division points in the same two-dimensional array based numbering way.

Further, the coordinate compensation step includes:
a triangular meshing step: performing triangular meshing on the matching points on the designed surface;
a projection step: projecting the position points of the machining path on the designed surface onto the nearest triangular mesh, and calculating area coordinates of projection points on the triangular mesh, where it is assumed that vertex indexes of the triangular mesh are (m1, n1), (m2, n2), and (m3, n3), respectively;
a coordinate calculation step: taking three points with indexes of (m1, n1), (m2, n2), and (m3, n3) from the matching points on the reverse surface to form a triangle, and calculating corresponding coordinates based on the area coordinates; and
a compensation step: projecting the obtained coordinates onto the reverse surface to obtain compensated coordinate points.

The machining step: importing program codes after compensation into a numerical control system to obtain an executable file, and enabling real-time data collection; executing a numerical control program, causing a support tilting head to approach a workpiece, obtaining a stable thickness, causing a milling head to implement cutting, performing real-time compensation by a cutter spindle to obtain a target thickness, and performing synchronous mechanical mirror milling motion on two sides to obtain a thickness reduction feature; replacing a support component, and performing synchronous mechanical mirror milling motion on two sides to complete hole making and edge cleaning features; and outputting real-time measurement data to obtain a detection report.

Compared with the prior art, the present invention has the following beneficial effects:
(1) According to the present invention, in view of the characteristics of high arch, large curvature and thin wall of the arched annular workpiece, the form of an internal and external equipment layout structure is used; by means of reasonable degree-of- freedom configuration, external milling and internal support and measurement of any machining point along a normal direction in a workpiece machining region can be implemented, mechanical mirror milling of the workpiece as a whole can be implemented, original dividing and chemical milling and butt-welding processes for a workpiece can be replaced, and environmentally friendly machining of the workpiece can be implemented.
(2) According to the present invention, the front-back movement degree-of- freedom axis X2 of the support tilting head above the support saddle is added, such that deformation (such as local concave-convex deformation of the workpiece) of the workpiece in a roundness direction can be rapidly adapted, quick response of equipment can be increased, the machining accuracy can be ensured, and the machining efficiency can be improved.
(3) According to the present invention, by means of synchronous mirror milling of "milling and measurement integration", the wall thickness accuracy and contour accuracy of the workpiece are ensured, and the machining accuracy and efficiency are improved.

### BRIEF DESCRIPTION OF THE DRAWINGS

Other features, objectives and advantages of the present invention will become more apparent upon reading the detailed description of the non-restrictive embodiments with reference to the following drawings, in which:
FIG. 1 is an overall structural diagram of a mirror milling device for machining an arched annular thin-walled workpiece according to the present invention;
FIG. 2 is an overall structural diagram of an external vertical gantry milling head assembly and an internal support and measurement head assembly;
FIG. 3 is an overall structural diagram of an external vertical gantry milling head assembly and an internal support and measurement head assembly;
FIG. 4 is a structural diagram of an external milling head and an internal measurement head;
FIG. 5 is a flowchart of a compensation method for a machining path;
FIG. 6 is a flowchart of a machining step;
FIG. 7 is a schematic diagram of creation of a reference circle;
FIG. 8 is a schematic diagram of coverage by parallel curves;
FIG. 9 is a schematic diagram of generation and numbering of matching points; and
FIG. 10 is a schematic diagram of area coordinates of projection points of points to be compensated on a surface.

In the drawings: external vertical gantry milling head assembly 1, internal support and measurement head assembly 2, clamping fixture 3, worktable 4, and workpiece 5; base 101, slide rest 102, cross beam 103, saddle 104, ram 105, double fork tilting head 106, milling head 107, and cutter 108; and fixed base 201, rotary table 202, support column 203, support saddle 204, support tilting head 205, support probe 206, and follow-up support and measurement component 207.

### DETAILED DESCRIPTION

The present invention is described in detail below with reference to specific embodiments. The following embodiments will assist those skilled in the art in further understanding the present invention, but do not limit the present invention in any form. It is to be pointed out that several changes and improvements may also be made by those of ordinary skill in the art without departing from the conception of the present invention. All the changes and improvements fall within the scope of protection of the present invention.

### Embodiment 1

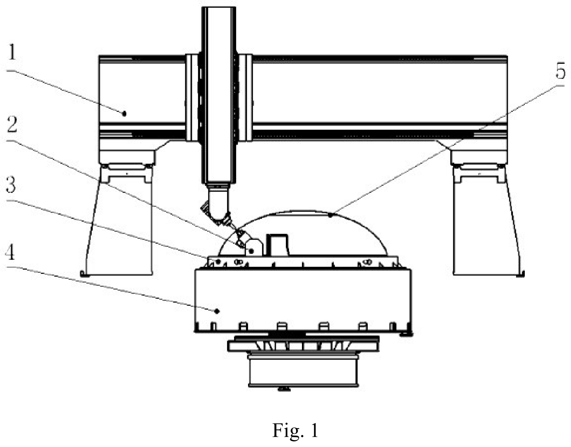

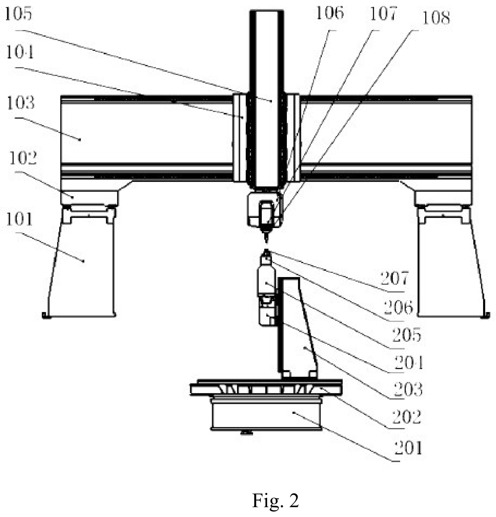

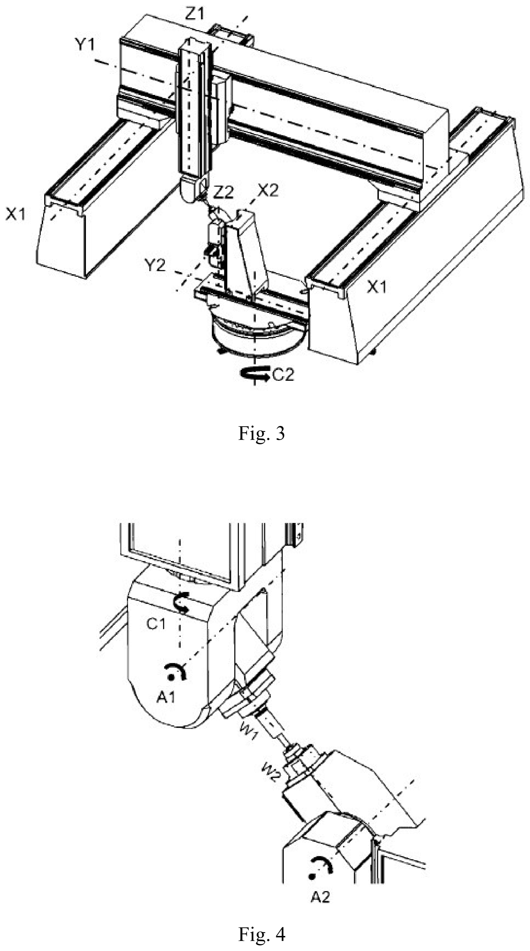

As shown in FIG. 1 to FIG. 4, the present invention provides a mirror milling device for machining an arched annular thin-walled workpiece, including an external vertical gantry milling head assembly 1, an internal support and measurement head assembly 2, a clamping fixture 3, and a worktable 4. The external vertical gantry milling head assembly 1 is located on an outer side of a workpiece 5 and can implement external milling of the workpiece 5. The internal support and measurement head assembly 2 is located on an inner side of the workpiece 5 and can implement internal support and measurement of the workpiece 5. An external milling head and an internal support and measurement head are in a vertically opposite position relationship. The clamping fixture 3 is located between the external vertical gantry milling head assembly 1 and the internal support and measurement head assembly 2 and can implement positioning, clamping and fixation of the workpiece 5. A clamping range of the clamping fixture 3 is adjustable, and the clamping fixtures 3 with different specifications and dimensions are capable of being changed to adapt to clamping of workpieces 5 with different specifications. The worktable 4 is located below the clamping fixture 3 and functions to support and fix the clamping fixture 3, and the clamping fixtures 3 with different specifications are rapidly clamped with/separated from the worktable 4 by means of zero point positioning to improve the machining efficiency of equipment and are guided by guide pins which function to protect the zero point positioning.

The external vertical gantry milling head assembly 1 includes bases 101, slide rests 102, a cross beam 103, a saddle 104, a ram 105, a double fork tilting head 106, a milling head 107, and a cutter 108. The external vertical gantry milling head assembly 1 has at least five degrees of freedom for controlling movement of the cutter 108 in a spatial range, and has a stroke covering machining of any point on an outer surface of the workpiece 5. In a preferred embodiment of the present invention, the external vertical gantry milling head assembly has six axes, comprising X1, Y1, Z1, A1, C1, and W1. Among them, X1, Y1, Z1, and W1 are translation axes, and A1 and C1 are rotation axes.

In a preferred embodiment of the present invention, the bases 101 are fixed on the ground and distributed in a mirror symmetry manner on left and right sides; the slide rests 102 are distributed in a mirror symmetry manner on the left and right sides, are connected to the bases 101 by at least one group of linear guide rails on one side, respectively, and can be driven by transmission mechanisms such as gear racks or lead screw nuts, the cross beam 103 and the slide rests 102 are fixed together by screws, and the slide rests 102 and the cross beam 103 move back and forth relative to the bases 101 in the axis X1;
the saddle 104 is connected to the cross beam 103 by at least two groups of linear guide rails and can be driven by a transmission mechanism such as a gear rack or a lead screw nut, and the saddle 104 moves left and right on the cross beam 103 in the axis Y1 which is perpendicular to the axis X1;
the ram 105 is connected to the saddle 104 by at least two groups of linear guide rails and is driven by a transmission mechanism such as a gear rack or a lead screw nut, the ram 105 moves up and down on the saddle 104 in the axis Z1 which is perpendicular to the axis X1/the axis Y1, and a balancing device can be provided for balancing a weight to improve the dynamic response of the axis Z1;
the double fork tilting head 106 is mounted at an end part of the ram, and the double fork tilting head 106 rotates relative to a center line thereof around the axis C1 which is parallel to the axis Z1 and can implement ±360° rotation;
the milling head 107 is mounted in a middle of the double fork tilting head 106, the milling head 107 rotates relative to an axis of a position connected to the double fork tilting head 106 around the axis A1, and the axis A1 moves in a plane where the axis X1 and the axis Y1 are located, the axis A1, when the axis C1 is at different rotation angles, can be parallel to the axis X1 or the axis Y1 at a time point, and the axis A1 can implement ±110° swing; and
the cutter 108 is mounted at a front end of the milling head 107, and the cutter 108 moves back and forth relative to the milling head 107 in the axis W1 which can implement the rapid feed in a normal direction to improve the quick response of a machine tool.

The internal support and measurement head assembly 2 includes a fixed base 201, a rotary table 202, a support column 203, a support saddle 204, a support tilting head 205, a support probe 206, and a follow-up support and measurement component 207. The internal support and measurement head assembly 2 has at least five degrees of freedom for controlling movement of the follow-up support and measurement component 207 in the spatial range, and has a stroke capable of covering support and measurement of an inner surface of the workpiece 5. In a preferred embodiment of the present invention, the internal support and measurement head assembly has six axes, comprising X2, Y2, Z2, A2, C2, and W2, in which X2/Y2/Z2/W2 is a translation axis, and A2/C2 is a rotation axis.

In a preferred embodiment of the present invention, the fixed base 201 is fixed on the ground and plays an integral support role, and preferably, the fixed base 201 is of an annular structure. The rotary table 202 is connected to the fixed base 201 by a collar and is driven by a transmission mechanism such as a roller tooth ring or a gear ring, and the rotary table 202 rotates on the fixed base 201 around the axis C2. The axis C2 rotates about a center line of the rotary table 202 and a center line of the fixed base 201, and has a rotation range of -120° to 600°;
the support column 203 is connected to the rotary table 202 by at least two groups of linear guide rails and can be driven by a transmission mechanism such as a lead screw nut, and the support column 203 moves back and forth on the rotary table 202 in the axis Y2;
the support saddle 204 is connected to the support column 203 by at least two groups of linear guide rails and can be driven by a transmission mechanism such as a lead screw nut, the support saddle 204 moves up and down on the support column 203 in the axis Z2 which is perpendicular to the axis Y2, and a balancing device can be provided for balancing a weight to improve the dynamic response of the axis Z2;
the support tilting head 205 is connected to the support saddle 204 by at least two groups of linear guide rails and can be driven by a transmission mechanism such as a lead screw nut, the support tilting head 205 moves back and forth above the support saddle in the axis X2, and the axis X2, the axis Y2, and the axis Z2 are perpendicular to one another in space;
the support probe 206 is mounted on a side surface of the support tilting head 205, and the support probe 206 rotates relative to an axis of a position connected to the support tilting head 205 around the axis A2 which has a swing range of -10° to 100°; and
the follow-up support and measurement component 207 is mounted at a front end of the support probe 206, and the follow-up support and measurement component 207 moves back and forth relative to the support probe 206 in the axis W2 which can implement the rapid feed in the normal direction to improve the quick response of the machine tool.

The external vertical gantry milling head assembly 1 and the internal support and measurement head assembly 2 form an internal and external synchronous motion relationship with respect to the workpiece in the form of a vertically opposite layout structure, have strokes covering an entire workpiece machining region, and can implement real-time milling and follow-up support and measurement, which effectively reduces vibration during machining and improves the machining accuracy.

The clamping fixture 3 can implement rapid clamping and fixation of the workpiece 5 and is fixed in different clamping ways of clamping by a positioning vice or pressing by a press plate based on different edge states of the workpiece, a clamping range of the clamping fixture 3 is adjustable, and different specifications and dimensions are capable of being changed to adapt to clamping of workpieces 5 with different specifications. Preferably, the clamping fixture 3 is of an annular structure.

The worktable 4 is located below the clamping fixture 3 and functions to support and fix the clamping fixture 3. The worktable 4 is preferably in the form of an annular structure. Clamping fixtures 3 with different specifications can be rapidly clamped with/separated from the worktable 4 by a mechanism such as preferably a zero point positioning mechanism, thereby improving the machining efficiency of equipment.

### Embodiment 2

The workpiece has a spherical curved surface and has a large dimension and a small thickness. As a result, the workpiece is extremely prone to deformation whether in the process of forming a blank or in the process of clamping, resulting in a large deviation between an actual shape of the blank and a designed shape. Therefore, the mirror milling device for machining an arched annular thin-walled workpiece provided by Embodiment 1 must compensate and correct a machining path to machine a qualified workpiece.

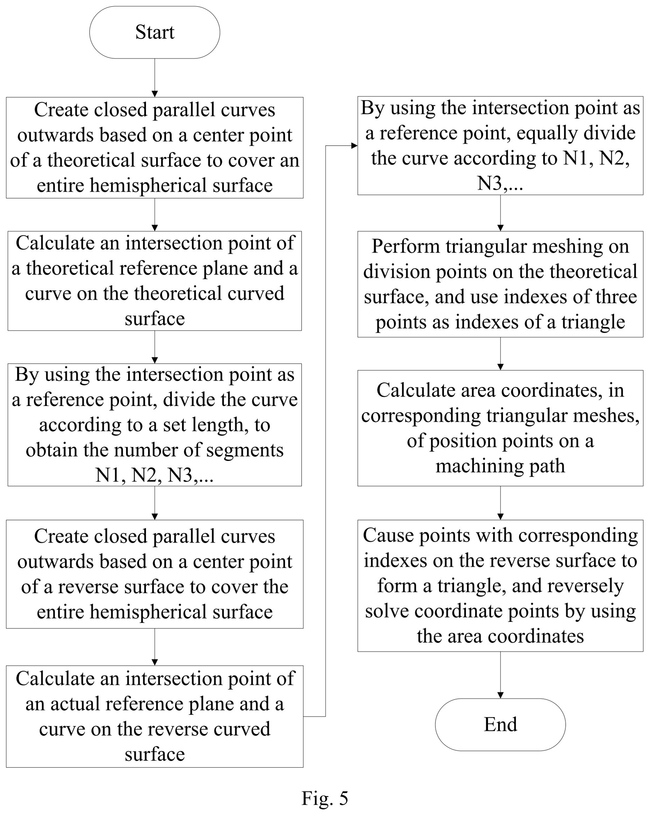

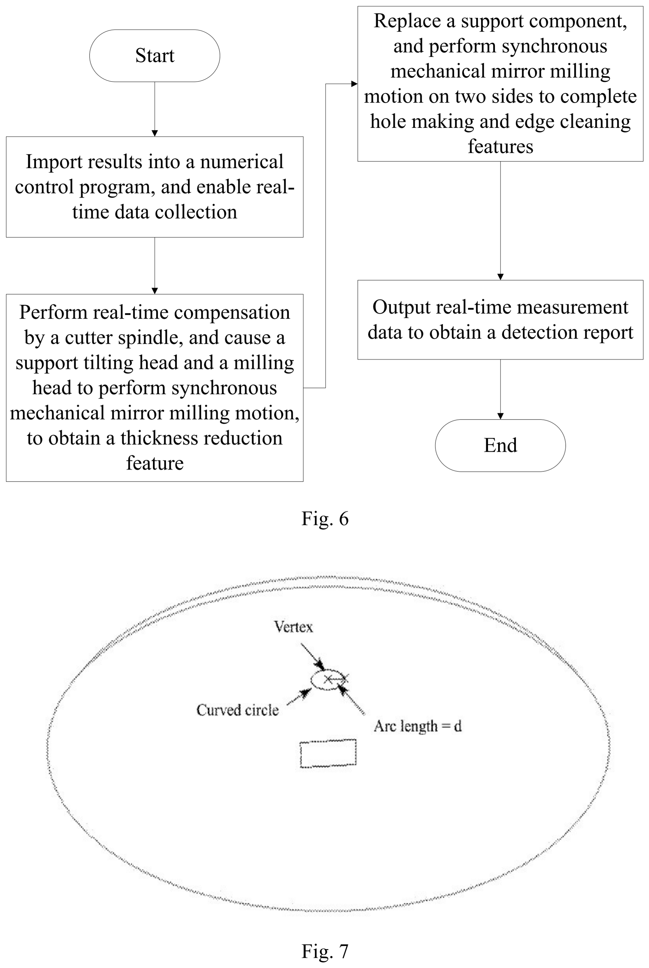

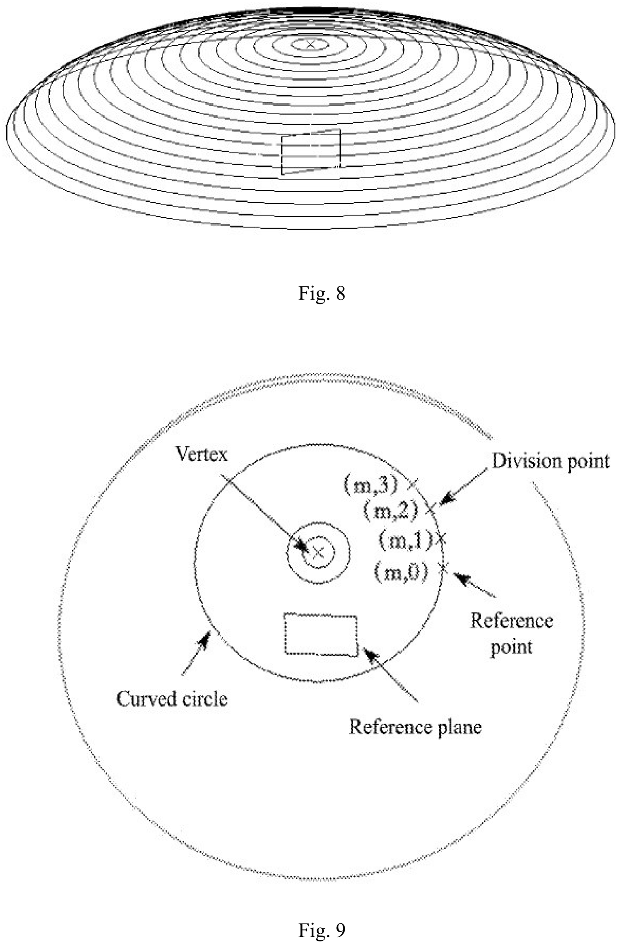

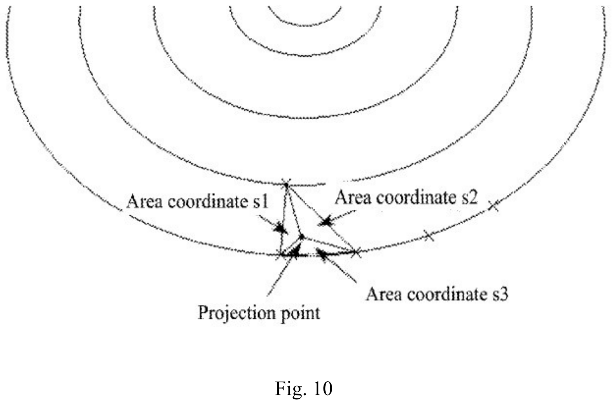

As shown in FIG. 5 to FIG. 10, it is assumed in the present invention that the actual shape of the workpiece has been obtained by means of three-dimensional model measurement and reconstruction. The main problem solved by the present invention is how to compensate the machining path on the spherical surface from a designed curved surface to an actual curved surface obtained by means of reversing. First, a center point on a theoretical spherical surface is selected, and then parallel curves with an equal geodesic distance are created outwards by using the point as a center. It is assumed that a plane XOZ passes through the center point, and the spherical surface is equally divided into two parts. By using an intersection point of the plane XOZ and a curve as a reference point, the curve is divided into a plurality of line segments with an equal length. Then, the same operations are performed on the actual curved surface to obtain matching points one by one on the designed curved surface and the actual curved surface. Finally, triangular meshing is performed on matching points on a theoretical model, area coordinates, in corresponding triangular meshes, of position points on a machining path are calculated, and corresponding position points are calculated on the actual curved surface based on the area coordinates and indexes of the corresponding triangular meshes. As shown in FIG. 5, specifically, steps are as follows:
a vertex determination step: determining a vertex of the spherical curved surface on a designed model, and then creating a circle on the curved surface with the vertex as a center, where a length of an arc line from any point on the circle to the vertex is d, as shown in FIG. 7;
a parallel curve coverage step: by using the circle as reference, creating a parallel curve on the spherical surface, with a parallel distance being a geodesic distance and a length being d, and continuously creating parallel curves until the entire spherical surface is covered, as shown in FIG. 8;
an intersection point calculation step: calculating two intersection points of the reference plane XOZ and the parallel curve, and here taking an intersection point in a direction +X;
a circular arc obtaining step: by using the intersection point in the previous step as reference, dividing the circle into circular arcs with an equal length being d, and if a perimeter of the circle is incapable of being divisible by d, finely adjusting the length of the circular arcs to ensure that the length of each circular arc on a circumference is the same;
a circular arc numbering step: numbering endpoints of the circular arcs, which are referred to as matching points hereinafter, by using a two-dimensional array (m, n), where m represents an index of the parallel curve, and n represents indexes of division points on the parallel curve, as shown in FIG. 9;
a segment number recording step: recording the number of segments such as N1, N2, N3, . . . obtained by equally dividing each parallel curve above;
a reference point obtaining step: performing processes of the vertex determination step, the parallel curve coverage step, and the intersection point calculation step on the reverse curved surface, and obtaining a parallel curve division reference point on the reverse curved surface;
a division point numbering step: based on the number of segments N1, N2, N3, . . . obtained by dividing each circular arc in the segment number recording step, equally dividing the parallel curve on the reverse surface, and numbering the division points in the same two-dimensional array based numbering way.
a triangular meshing step: performing triangular meshing on the matching points on the curved surface of the designed model;
a projection step: projecting the position points of the machining path on the curved surface onto the nearest triangular mesh, and calculating area coordinates of projection points on the triangular mesh, where it is assumed that vertex indexes of the triangular mesh are (m1, n1), (m2, n2), and (m3, n3), respectively, as shown in FIG. 10;
a coordinate calculation step: taking three points with indexes of (m1, n1), (m2, n2), and (m3, n3) from the matching points on the reverse curved surface to form a triangle, and calculating corresponding coordinates based on the area coordinates; and
a compensation step: projecting the coordinates obtained in the previous step onto the reverse curved surface to obtain compensated coordinate points.

Through the compensation method for the machining path on the spherical surface, the matching between the designed curved surface and the reverse curved surface and the compensation of the machining path are completed, the problem that the deformed spherical surface cannot be machined is solved, and the requirements of part cutting are met.

After the compensation is completed, the machining step can be performed according to the machining method shown in FIG. 6: importing program codes after compensation into a numerical control system to obtain an executable file, and enabling real-time data collection; executing a numerical control program, causing a support tilting head to approach a workpiece, obtaining a stable thickness, causing a milling head to implement cutting, performing real-time compensation by a cutter spindle to obtain a target thickness, and performing synchronous mechanical mirror milling motion on two sides to obtain a thickness reduction feature; replacing a support component, and performing synchronous mechanical mirror milling motion on two sides to complete hole making and edge cleaning features; and outputting real-time measurement data to obtain a detection report.

In the description of the present application, it is to be understood that the orientations or positional relationships indicated by the terms "upper", "lower", "front", "back", "left", "right", "vertical", "horizontal", "top", "bottom", "inside", "outside" , etc. are based on the orientations or positional relationships shown in the accompanying drawings, only for the convenience of describing the present application and simplifying the description rather than indicating or implying that the device or element referred to must have a particular orientation or be constructed and operated in a particular orientation, and therefore should not be construed as a limitation to the present application.

The specific embodiments of the present invention are described above. It is to be understood that the present invention is not limited to the specific embodiments described above, and that various changes or modifications may be made by those skilled in the art within the scope of the claims without affecting the spirit of the present invention. The embodiments in the present application and the features in the embodiments may be combined with each other under no conflict.

## Claims

1. A mirror milling device for machining an arched annular thin-walled workpiece, comprising an external vertical gantry milling head assembly (1), an internal support and measurement head assembly (2), a clamping fixture (3), and a worktable (4), wherein
the external vertical gantry milling head assembly (1) is located on an outer side of a workpiece (5) and implements external milling of the workpiece (5);
the internal support and measurement head assembly (2) is located on an inner side of the workpiece (5) and implements internal support and measurement of the workpiece (5);
the external vertical gantry milling head assembly (1) and the internal support and measurement head assembly (2) are in a vertically opposite position relationship;
the clamping fixture (3) is located between the external vertical gantry milling head assembly (1) and the internal support and measurement head assembly (2), and implements positioning, clamping and fixation of the workpiece (5); and
the worktable (4) is located below the clamping fixture (3) and functions to support and fix the clamping fixture (3).

2. The mirror milling device for machining an arched annular thin-walled workpiece according to claim 1, wherein the external vertical gantry milling head assembly (1) and the internal support and measurement head assembly (2) form an internal and external synchronous motion relationship with respect to the workpiece (5) in the form of a vertically opposite layout structure, have strokes covering an entire workpiece machining region, and implement real-time milling and follow-up support and measurement.

3. The mirror milling device for machining an arched annular thin-walled workpiece according to claim 1, wherein the clamping fixture (3) is fixed in different clamping ways of clamping by a positioning vice or pressing by a press plate based on different edge states of the workpiece (5), a clamping range of the clamping fixture (3) is adjustable, and the clamping fixture with different specifications and dimensions are capable of being changed to adapt to clamping of workpieces (5) with different specifications.

4. The mirror milling device for machining an arched annular thin-walled workpiece according to claim 1, wherein the clamping fixture (3) is of an annular structure.

5. The mirror milling device for machining an arched annular thin-walled workpiece according to claim 1, wherein the worktable (4) is of an annular structure, and clamping fixtures (3) with different specifications are clamped with/separated from the worktable (4) by means of zero point positioning and are guided by guide pins, and the guide pins function to protect the zero point positioning.

6. The mirror milling device for machining an arched annular thin-walled workpiece according to claim 1, wherein the external vertical gantry milling head assembly (1) comprises bases (101), slide rests (102), a cross beam (103), a saddle (104), a ram (105), a double fork tilting head (106), a milling head (107), and a cutter (108);
the external vertical gantry milling head assembly (1) has at least five degrees of freedom for controlling movement of the cutter (108) in a spatial range, and has a stroke covering machining of any point on an outer surface of the workpiece (5);
the bases (101) are fixed on the ground and distributed in a mirror symmetry manner on left and right sides;
the slide rests (102) are distributed in a mirror symmetry manner on the left and right sides, are connected to the bases (101) by at least one group of linear guide rails on one side, respectively, and are driven by transmission mechanisms;
the cross beam (103) and the slide rests (102) are fixed together by screws;
the saddle (104) is connected to the cross beam (103) by at least two groups of linear guide rails and is driven by a transmission mechanism;
the ram (105) is connected to the saddle (104) by at least two groups of linear guide rails and is driven by a transmission mechanism;
the double fork tilting head (106) is mounted at an end part of the ram;
the milling head (107) is mounted in a middle of the double fork tilting head (106); and
the cutter (108) is mounted at a front end of the milling head (107).

7. The mirror milling device for machining an arched annular thin-walled workpiece according to claim 6, wherein the external vertical gantry milling head assembly (1) has six axes, comprising axes X1, Y1, Z1, A1, C1, and W1, wherein the axes X1, Y1, Z1, and W1 are translation axes, and the axes A1 and C1 are rotation axes;
the slide rests (102) and the cross beam (103) move relative to the bases (101) back and forth in the axis X1;
the saddle (104) moves on the cross beam (103) left and right in the axis Y1, and the axis Y1 is perpendicular to the axis X1;
the ram (105) moves on the saddle (104) up and down in the axis Z1, and the axis Z1 is perpendicular to the axis X1 and the axis Y1, and a balancing device is provided for balancing a weight to improve a dynamic response of the axis Z1;
the double fork tilting head (106) rotates relative to a center line of the double fork tilting head (106) around the axis C1, and the axis C1 is parallel to the axis Z1 and implements ±360° rotation;
the milling head (107) rotates relative to an axis of a position connected to the double fork tilting head (106) around the axis A1, and the axis A1 moves in a plane where the axis X1 and the axis Y1 are located, the axis A1, when the axis C1 is at different rotation angles, is parallel to the axis X1 or the axis Y1 at a time point, and the axis A1 implements ±110° swing; and
the cutter (108) moves relative to the milling head (107) back and forth in the axis W1, and the axis W1 implements a rapid feed in a normal direction.

8. The mirror milling device for machining an arched annular thin-walled workpiece according to claim 1, wherein the internal support and measurement head assembly (2) comprises a fixed base (201), a rotary table (202), a support column (203), a support saddle (204), a support tilting head (205), a support probe (206), and a follow-up support and measurement component (207);
the internal support and measurement head assembly (2) has at least five degrees of freedom for controlling movement of the follow-up support and measurement component (207) in a spatial range, and has a stroke covering support and measurement of an inner surface of the workpiece (5);
the fixed base (201) is fixed on the ground and plays an integral support role;
the rotary table (202) is connected to the fixed base (201) by a collar and is driven by a transmission mechanism;
the support column (203) is connected to the rotary table (202) by at least two groups of linear guide rails and is driven by a transmission mechanism;
the support saddle (204) is connected to the support column (203) by at least two groups of linear guide rails and is driven by a transmission mechanism;
the support tilting head (205) is connected to the support saddle (204) by at least two groups of linear guide rails and is driven by a transmission mechanism;
the support probe (206) is mounted on a side surface of the support tilting head (205); and
the follow-up support and measurement component (207) is mounted at a front end of the support probe (206).

9. The mirror milling device for machining an arched annular thin-walled workpiece according to claim 8, wherein the internal support and measurement head assembly (2) has six axes, comprising axes X2, Y2, Z2, A2, C2, and W2, wherein the axes X2, Y2, Z2, and W2 are translation axes, and the axes A2 and C2 are rotation axes;
the rotary table (202) rotates on the fixed base (201) around the axis C2, and the axis C2 rotates about a center line of the rotary table (202) and a center line of the fixed base (201), and has a rotation range of -120° to 600°;
the support column (203) moves on the rotary table (202) back and forth in the axis Y2;
the support saddle (204) moves on the support column (203) up and down in the axis Z2, and the axis Z2 is perpendicular to the axis Y2, and a balancing device is provided for balancing a weight to improve a dynamic response of the axis Z2;
the support tilting head (205) moves above the support saddle back and forth in the axis X2, and the axis X2, the axis Y2, and the axis Z2 are perpendicular to one another in space;
the support probe (206) rotates relative to an axis of a position connected to the support tilting head (205) around the axis A2, and the axis A2 has a swing range of -10° to 100°; and
the follow-up support and measurement component (207) move relative to the support probe (206) back and forth in the axis W2, and the axis W2 implements a rapid feed in the normal direction.

10. The mirror milling device for machining an arched annular thin-walled workpiece according to claim 8, wherein the fixed base (201) is of an annular structure.

11. A machining method of the mirror milling device for machining an arched annular thin-walled workpiece according to claim 1, comprising:
a designed surface calculation step: selecting a center point on a designed surface, and then creating parallel curves with an equal geodesic distance outwards by using the center point as a center; assuming that a plane XOZ passes through the center point, and equally dividing the designed surface into two parts; and dividing each of the parallel curves into a plurality of line segments with an equal length by using a intersection point of the plane XOZ and the parallel curve as a reference point;
a reverse surface calculation step: selecting a center point on a reverse surface, and then creating parallel curves with an equal geodesic distance outwards by using the center point as a center; assuming that the plane XOZ passes through the center point, and equally dividing the reverse surface into two parts; and dividing each of the parallel curves into a plurality of line segments with an equal length by using a intersection point of the plane XOZ and the parallel curve as a reference point;
a coordinate compensation step: performing triangular meshing on endpoints of the line segments on the designed surface, calculating area coordinates, in corresponding triangular meshes, of position points on a machining path, and calculating corresponding position points on the reverse surface based on the area coordinates and indexes of the corresponding triangular meshes; and
a machining step: importing results of the coordinate compensation step into a numerical control system, causing a support tilting head to approach the workpiece, obtaining a thickness, causing a milling head to implement cutting, performing real-time compensation by a cutter spindle to obtain a target thickness, and performing synchronous mechanical mirror milling motion on two sides to obtain a thickness reduction feature; and replacing a support component, and performing synchronous mechanical mirror milling motion on two sides to complete hole making and edge cleaning features.

12. The machining method of the mirror milling device for machining an arched annular thin-walled workpiece according to claim 11, wherein the designed surface calculation step comprises:
a vertex determination step: determining a vertex on the designed surface, and creating a circle with the vertex as a center, wherein a length of an arc line from any point on the circle to the vertex is d;
a parallel curve coverage step: by using the circle as a reference, creating a parallel curve on the designed surface, with a parallel distance being a geodesic distance and a length being d, and continuously creating the parallel curves until the designed surface is entirely covered;
an intersection point calculation step: calculating two intersection points of the reference plane XOZ and the parallel curve, and taking one of the two intersection points in a direction +X;
a circular arc obtaining step: by using the taken intersection point as a reference, dividing the circle into circular arcs with an equal length being d, and if a perimeter of the circle is incapable of being divisible by d, finely adjusting the length of the circular arcs to ensure that the length of each of the circular arcs on a circumference is identical;
a circular arc numbering step: numbering endpoints of the circular arcs by using a two-dimensional array (m, n), wherein the endpoints of the circular arcs indicates marching points, m represents an index of the parallel curve, and n represents indexes of division points on the parallel curve; and
a segment number recording step: recording a number of segments obtained by equally dividing each of the parallel curves.

13. The machining method of the mirror milling device for machining an arched annular thin-walled workpiece according to claim 12, wherein the reverse surface calculation step comprises:
a reference point obtaining step: performing processes of the vertex determination step, the parallel curve coverage step, and the intersection point calculation step on the reverse surface, and obtaining a parallel curve division reference point on the reverse surface; and
a division point numbering step: based on the number of segments obtained by dividing each of the circular arcs in the segment number recording step, equally dividing the parallel curves on the reverse surface, and numbering the division points in the same number way by using the two-dimensional array (m, n).

14. The machining method of the mirror milling device for machining an arched annular thin-walled workpiece according to claim 13, wherein the coordinate compensation step comprises:
a triangular meshing step: performing triangular meshing on the matching points on the designed surface;
a projection step: projecting the position points of the machining path on the designed surface onto a nearest triangular mesh, and calculating area coordinates of projection points on the nearest triangular mesh, wherein it is assumed that vertex indexes of the nearest triangular mesh are (m1, n1), (m2, n2), and (m3, n3), respectively;
a coordinate calculation step: taking three points with indexes of (m1, n1), (m2, n2), and (m3, n3) from the matching points on the reverse surface to form a triangle, and calculating corresponding coordinates based on the area coordinates; and
a compensation step: projecting the corresponding coordinates onto the reverse surface to obtain compensated coordinate points.
